**Europäisches Patentamt**

**European Patent Office**

**Office européen des brevets**

(19)

(11) Numéro de publication : **0 333 590 B1**

# (12) FASCICULE DE BREVET EUROPEEN

(45) Date de publication du fascicule du brevet :
20.05.92 Bulletin 92/21

(51) Int. Cl.⁵ : **B65G 49/06**

(21) Numéro de dépôt : **89400733.5**

(22) Date de dépôt : **16.03.89**

(54) **Ensemble de manipulation à ventouses.**

(30) Priorité : **17.03.88 FR 8803469**

(43) Date de publication de la demande :
**20.09.89 Bulletin 89/38**

(45) Mention de la délivrance du brevet :
**20.05.92 Bulletin 92/21**

(84) Etats contractants désignés :
**BE CH DE ES GB IT LI NL SE**

(56) Documents cités :
**DE-C- 809 338**
**FR-A- 1 473 119**

(73) Titulaire : **Adler S. A.**
**25/27, rue Etienne Marcel**
**F-93500 Pantin (FR)**

(72) Inventeur : **Cornillier, Jean-Claude**
**586, Rue Louis Gracin**
**F-60200 Margny Les Compiegne (FR)**
Inventeur : **Cayol, André Jean**
**3, rue du Moulin**
**F-60150 Thourotte (FR)**

(74) Mandataire : **Hoisnard, Jean-Claude**
**Cabinet Beau de Loménie 55, rue**
**d'Amsterdam**
**F-75008 Paris (FR)**

## Description

L'invention est relative à un ensemble de manipulation à ventouses déformables pour la manipulation d'objets, tels que des glaces en verre, présentant une surface unie et non poreuse d'application des ventouses, ensemble comprenant un corps et au moins une ventouse déformable montée sur ce corps.

Il existe déjà de tels ensembles, comportant plusieurs ventouses, généralement deux, dont l'effet de préhension est supprimé, à la volonté de l'utilisateur, au moyen d'un clapet de suppression du vide de la face inférieure de chaque ventouse. Les ensembles existants présentent donc les inconvénients d'avoir recours à des dispositifs mécaniques - des clapets - fragiles et coûteux, et à des tringleries de commande à bielles multiples, également coûteuses. Il est, en outre, impossible de supprimer le vide dans plusieurs ventouses en une seule manoeuvre.

Il existe par ailleurs des ensembles à ventouse unique, dans lesquels l'effet de suppression est supprimé en relevant une partie du bord de la ventouse, de préférence munie dans ce but d'un organe de relevage, tel qu'un doigt de relevage. On ne connaît par contre pas de tels ensembles qui comprendraient plusieurs ventouses et qui en outre auraient une tringlerie simple, fiable et peu coûteuse.

L'invention entend remédier à cette absence d'un ensemble à plusieurs, mais au moins une ventouse, et propose la définition d'un nouvel ensemble de manipulation ayant une tringlerie monobloc, simple et résistante.

En faisant référence à l'état de la technique qui concerne un ensemble de manipulation, qui comprend également un mécanisme de suppression de l'effet de préhension des ventouses par déformation du bord de chaque ventouse, la présente invention est caractérisée en ce que le mécanisme est constitué lui-même par au moins un organe de manoeuvre, tel qu'un poussoir, monté mobile sur le corps ; un ensemble monobloc de commande monté mobile sur le corps et par rapport à lui et présentant au moins autant de zones mobiles de commande qu'il y a de ventouses ; autant de liaisons de ventouse qu'il y a de ventouses, reliant, chaque liaison de ventouse, une ventouse à une desdites zones de commande ; et autant de liaisons de manoeuvre qu'il y a d'organes de manoeuvre, reliant, chaque liaison de manoeuvre, un organe de manoeuvre audit ensemble de commande.

Les avantageuses dispositions suivantes sont, en outre, de préférence adoptées :
– l'ensemble de commande est constitué par un polygone à géométrie variable formé de biellettes, l'ensemble formant une pièce unique moulée dans un matériau plastique ;
– l'ensemble de manipulation comprend deux ventouses, cependant que l'ensemble des biellettes, au repos, est conformé sensiblement en un losange monobloc et que les zones mobiles de commande sont disposées sensiblement à deux sommets opposés dudit losange ;
– les liaisons de manoeuvre sont au nombre de deux et sont disposées sensiblement aux deux autres sommets opposés dudit losange ;
– chaque liaison de ventouse est constituée par au moins un doigt de ventouse disposé en saillie sur la ventouse associée et engagé dans une rainure dont est muni l'ensemble de commande ;
– chaque ventouse est réalisée par moulage et chaque doigt de ventouse est rendu solidaire du bord de la ventouse associée par fixation dans ladite ventouse au moment de son moulage ;
– chaque liaison de manoeuvre est constituée par au moins un doigt de manoeuvre solidaire d'un organe de manoeuvre et engagé dans une rainure dont est muni l'ensemble de commande ;
– chaque organe de manoeuvre est réalisé en un matériau plastique moulé et chaque doigt de manoeuvre est réalisé monobloc avec l'organe de manoeuvre associé au moment du moulage de celui-ci ;
– chaque liaison de manoeuvre est fixée sur un coulisseau de guidage monté coulissant sur le corps ;
– le corps présente à sa partie supérieure une poignée dont la face supérieure est inclinée d'avant en arrière par rapport au plan de la face d'application des ventouses ;
– l'ensemble de manipulation comporte plusieurs ventouses qui sont toutes attelées à un unique ensemble monobloc de commande, de manière à permettre en une seule manoeuvre la suppression des effets de préhension des diverses ventouses.

Les avantages de l'invention résident dans la suppression de clapets, qui risquaient de se gripper et de fuir, et dans celle d'une tringlerie à bielles articulées, qui, elles aussi, présentaient le risque de grippage dans le décollement par une seule action, et dans la réalisation économique obtenue.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :
– la figure 1 est une coupe longitudinale suivant I-I de la figure 2, d'une première réalisation d'un ensemble de manipulation conforme à l'invention ;
– La figure 2 est une coupe partielle suivant II-II de la figure 2 ;
– la figure 3 est une coupe partielle suivant III-III de la figure 1 ;

– la figure 4 est une coupe longitudinale analogue à celle de la figure 1, du même ensemble de manipulation, mais dans une autre configuration de service, celle de la suppression de l'effet de préhension des ventouses ;

– la figure 5 est une coupe analogue à celle de la figure 2, mais de l'ensemble de manipulation représenté sur la figure 4 ;

– la figure 6 est une coupe partielle, analogue à celle de la figure 2, d'une deuxième réalisation d'un ensemble de manipulation conforme à l'invention.

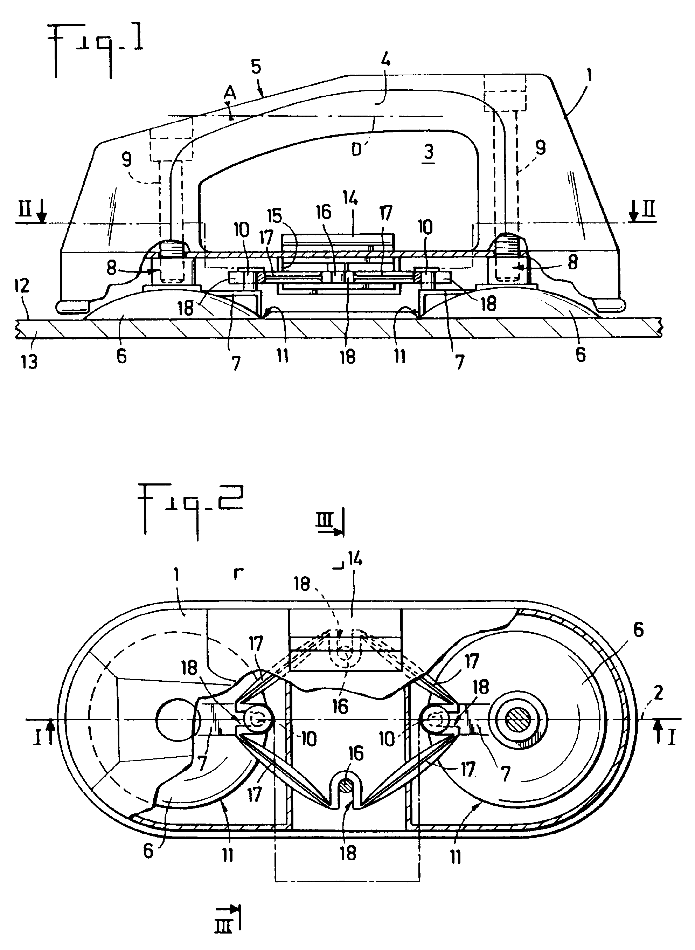

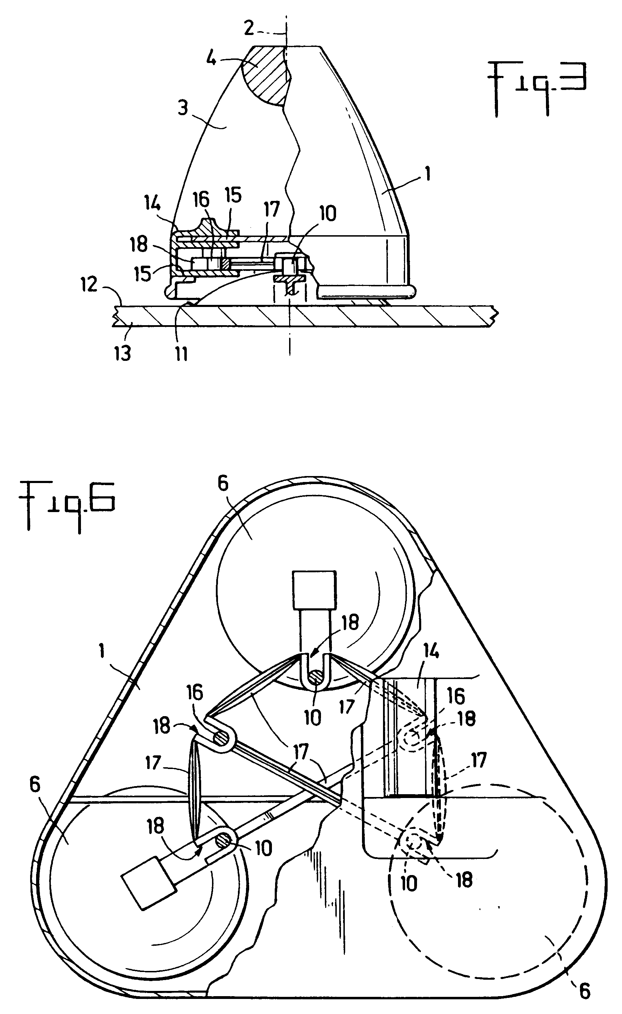

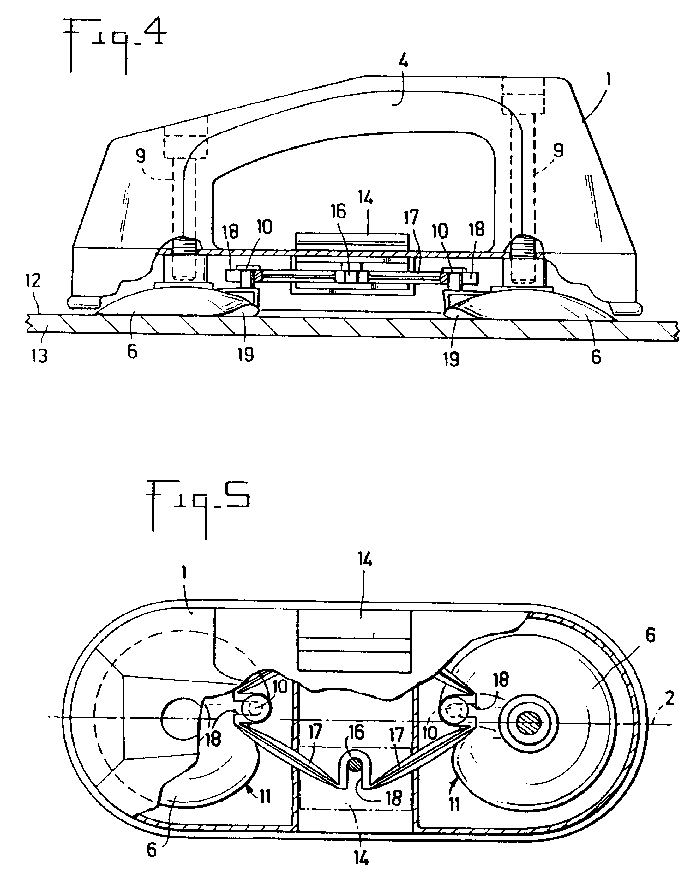

L'ensemble de manipulation à ventouses représenté sur les figures 1 à 5 est constitué par :

– un corps 1 symétrique par rapport à un plan longitudinal vertical 2, présentant un évidement central 3 délimité par un manche 4 formant poignée de manipulation, la face supérieure 5 du manche 4 ayant sa partie arrière inclinée d'un angle A d'environ 15° par rapport à la direction d'une droite horizontale D parallèle au plan vertical 2 ;

– deux ventouses 6, réalisées en élastomère moulé, munies à leur partie supérieure d'un bloc de fixation et de manoeuvre 7, venu de moulage avec chaque ventouse et comportant un alésage central taraudé 8 pour la fixation de la ventouse sur le corps 1 au moyen d'une vis 9 et un doigt de ventouse 10 plus particulièrement attaché au bord 11 de la ventouse, les deux ventouses 6 ayant chacune un plan de symétrie constitué par le plan vertical 2 et leurs bords 11 étant contenus dans un même plan horizontal 12, dit plan d'application des ventouses qui coïncide avec la face non poreuse et unie d'une glace en verre 13 sur laquelle les bords 11 des ventouses 6 sont susceptibles d'être appliqués ; l'élasticité de l'élastomère et le profil d'appui des ventouses permettent la préhension de glaces et d'objets bombés ;

– deux poussoirs 14, qui sont disposés symétriquement de chaque côté du plan vertical 2, sous le manche 4, qui sont montés coulissants horizontalement et perpendiculairement au plan vertical 2 dans des glissières 15 ménagées dans le corps 1, et qui constituent ainsi également des coulisseaux de guidage, chaque poussoir, d'un doigt de manoeuvre 16 orienté vers le bas, chaque doigt de manoeuvre 16 ayant été réalisé au moment du moulage du poussoir 14 correspondant en un matériau plastique ;

– un ensemble monobloc, réalisé en un matériau plastique, tel que le polypropylène, de quatre biellettes de commande 17, sensiblement conformé en un losange, avec quatre rainures 18 disposées sensiblement aux quatre sommets du losange, celui-ci ayant pour plan de symétrie le plan vertical 2.

Au repos, lorsque les ventouses ne sont appliquées sur aucune surface, ou lorsque (figures 1, 2 et 3) les ventouses 6 sont appliquées sur une surface unie et non poreuse 12, ou encore au moment (figures 4 et 5) où les ventouses 6 ont une partie de leur bord 11 déformée pour permettre la suppression de l'effet de préhension de la glace 13, dans toutes les configurations, les doigts de ventouse 10 sont et restent introduits dans deux des quatre rainures 18, qui sont situées au voisinage de deux sommets opposés du losange, et, les doigts de manoeuvre 16 sont et restent introduits dans les rainures 18, qui sont situées au voisinage des deux autres sommets opposés du losange, les rainures 18 étant suffisamment profondes pour l'obtention du maintien des doigts de ventouse 10 et de manoeuvre 16 dans lesdites rainures 18.

Les poussoirs 14 sont placés de manière à être accessibles et à pouvoir être manoeuvrés par la main d'un utilisateur, tenant par ailleurs le manche 4 en étant plus particulièrement appuyée sur la face supérieure 5 de ce manche.

Pour supprimer l'effet de préhension des ventouses 6, l'utilisateur appuie sur l'un des poussoirs 14, celui disposé à droite ou à gauche du plan vertical 2, selon le doigt de la main utilisée.

La configuration des ventouses 6 devient alors celle représentée sur les figures 4 et 5. Du côté du poussoir 14 qui est actionné, le doigt de manoeuvre 16 appuie sur le fond de la rainure 18 correspondante dans le sens la rapprochant du plan vertical 2. Cette poussée a pour conséquence une légère déformation élastique de l'ensemble des biellettes 17 dans la zone des sommets du losange, et une poussée des deux doigts 10 de ventouse par les rainures 18 correspondantes. Finalement, chacun des doigts 10 tire ou pousse sur le bord 11 de la ventouse 6 et le déforme (élastiquement) jusqu'à le relever et ménager un orifice 19 d'admission de l'air sous la ventouse, et par ce moyen supprimer l'effet de préhension de la ventouse.

La réalisation des figures 1 à 5 peut avoir de nombreuses variantes conformes à l'invention, comprenant notamment plus de deux ventouses, telles que la variante de la figure 6 comprenant trois ventouses 6. Les mêmes numéros de référence désignent les éléments correspondant à ceux déjà définis en regard des figures 1 à 5. Le fonctionnement de l'ensemble de manipulation de la figure 6 est par ailleurs évidemment analogue à celui des figures 1 à 5.

Le fonctionnement a déjà été exposé. Les avantages des réalisations décrites sont les suivants :

– le nombre de pièces constitutives est faible du fait que les doigts de ventouses 10 ne sont pas rapportés sur les ventouses 6, mais sont fixés au moment du moulage des ventouses, et forment donc un ensemble monobloc avec chaque ventouse ;

– de même, chaque doigt de manoeuvre 16 est monobloc avec le poussoir 14 correspondant ;
– enfin, l'ensemble des biellettes 17 et des rainures 18 est lui aussi monobloc ;
– le nombre des pièces distinctes est donc réduit, et, en ce qui concerne les biellettes 17, les risques de grippage ou de blocage entre biellettes ont été supprimés du fait de l'absence de toute articulation entre biellettes et de l'absence de tout ressort distinct de rappel, le rappel élastique étant obtenu par l'élasticité même de l'ensemble des biellettes 17 de commande et par l'élasticité des ventouses elles-mêmes ;
– le choix d'obtenir la supression de l'effet de préhension des ventouses par déformation du bord 11 des ventouses 6, au lieu de l'adoption de clapets de suppression du vide, a permis en outre la suppression desdits clapets et des risques de mauvais fonctionment qu'ils pouvaient avoir ;
– L'inclinaison de la face 5 du manche 4 facilite une prise en main satisfaisante de l'ensemble.

Les réalisations décrites sont donc peu coûteuses à fabriquer et à monter, et fiables.

**Revendications**

1. Ensemble de manipulation à ventouses déformables pour la manipulation d'objets, tels que des glaces en verre, présentant une surface unie et non poreuse d'application des ventouses, ensemble comprenant un corps (1), au moins une ventouse déformable (6) montée sur ce corps et
un mécanisme de suppression de l'effet de préhension des ventouses par déformation du bord de chaque ventouse caractérisé en ce que le mécanisme est, constitué lui-même par :
au moins un organe de manoeuvre (14), tel qu'un poussoir, monté mobile sur le corps (1) ;
un ensemble (17-18) monobloc de commande monté mobile sur le corps (1) et par rapport à lui et présentant au moins autant de zones mobiles de commande (18) qu'il y a de ventouses ;
autant de liaisons de ventouse (10) qu'il y a de ventouses, chaque liaison de ventouse (10) reliant une ventouse (6) à une desdites zones de commande (18) ; et
autant de liaisons de manoeuvre (16) qu'il y a d'organes de manoeuvre (14), chaque liaison de manoeuvre (16) reliant un organe de manoeuvre (14) audit ensemble de commande (17-18).

2. Ensemble de manipulation selon la revendication 1, caractérisé en ce que l'ensemble de commande est constitué par un polygone à géométrie variable formé de biellettes (17), l'ensemble formant une piéce unique moulée dans un matériau plastique.

3. Ensemble de manipulation selon la revendication 2, caractérisé en ce qu'il comprend deux ventouses (6), cependant que l'ensemble des biellettes (17), au repos, est conformé sensiblement en un losange monobloc et que les zones mobiles de commande (18) sont disposées sensiblement à deux sommets opposés dudit losange.

4. Ensemble de manipulation selon la revendication 3, caractérisé en ce que les liaisons de manoeuvre (16) sont au nombre de deux et sont disposées sensiblement aux deux autres sommets opposés dudit losange.

5. Ensemble de manipulation selon l'une quelconque des revendications 1 à 4, caractérisé en ce que chaque liaison de ventouse (10) est constituée par au moins un doigt de ventouse disposé en saillie sur la ventouse associée (6) et engagé dans une rainure (18) dont est muni l'ensemble de commande (17-18).

6. Ensemble de manipulation selon la revendication 5, caractérisé en ce que chaque ventouse (6) est réalisée par moulage et chaque doigt de ventouse (10) est rendu solidaire du bord (11) de la ventouse associée par fixation dans ladite ventouse au moment de son moulage ou moulé en un corps monobloc.

7. Ensemble de manipulation selon l'une quelconque des revendications 1 à 6, caractérisé en ce que chaque liaison de manoeuvre (16) est constituée par au moins un doigt de manoeuvre solidaire d'un organe de manoeuvre (14) et engagé dans une rainure (18) dont est muni l'ensemble de commande (17-18)

8. Ensemble de manipulation selon la revendication 7, caractérisé en ce que chaque organe de manoeuvre (14) est réalisé en un matériau plastique moulé et chaque doigt de manoeuvre (16) est réalisé monobloc avec l'organe de manoeuvre associé au moment du moulage de celui-ci.

9. Ensemble de manipulation selon l'une quelconque des revendications 1 à 8, caractérisé en ce que chaque liaison de manoeuvre (16) est fixée sur un coulisseau de guidage (14) monté coulissant sur le corps (1)

10. Ensemble de manipulation selon l'une quelconque des revendications 1 à 9, caractérisé en ce que le corps (1) présente à sa partie supérieure une poignée (2) dont la face supérieure (5) est inclinée d'avant en arrière par rapport au plan (D) de la face d'application (12) des ventouses (6).

11. Ensemble de manipulation selon l'une quelconque des revendications précédentes, caractérisé en ce qu'il comporte plusieurs ventouses qui sont toutes attelées à un unique ensemble (17-18) monobloc de commande, de manière à permettre en une seule manoeuvre la suppression des effets de préhension des diverses ventouses.

## Patentansprüche

1. Handhabungsvorrichtung mit verformbaren Saugnäpfen zur Handhabung von Gegenständen, wie Glasspiegeln, die eine glatte, nicht-poröse Auflagefläche für die Saugnäpfe haben, die Handhabungsvorrichtung einen Körper (1), mindestens einen auf dem Körper befestigten, verformbaren Saugnapf (6) und eine Einrichtung aufweist, die die Erfassungswirkung der Saugnäpfe durch Verformung des Randes jedes Saugnapfes beseitigt,

dadurch **gekennzeichnet** , dass die Einrichtung selbst gebildet wird durch:

mindestens ein Betätigungselement (14), wie ein Druckstück, das beweglich auf dem Körper (1) befestigt ist;

eine einstückige Steueranordnung (17-18), die beweglich auf dem Körper (1) und ihm gegenüber befestigt ist, und mindestens so viele bewegliche Steuerbereiche (18) aufweist, wie Saugnäpfe vorhanden sind;

so viele Saugnapfverbinder (10), wie Saugnäpfe vorhanden sind, wobei jeder Saugnapfverbinder (10) einen Saugnapf (6) mit einem der Steuerbereiche (18) verbindet; und

so viele Betätigungsverbindungen (16), wie Betätigungselemente (14) vorhanden sind, wobei jede Betätigungsverbindung (16) ein Betätigungselement (14) mit der genannten Steueranordnung (17-18) verbindet.

2. Handhabungsvorrichtung nach Anspruch 1, dadurch **gekennzeichnet**, dass die Handhabungsvorrichtung aus einem Polygon mit veränderlicher Geometrie besteht, das durch kleine Glieder (17) gebildet wird, wobei die Vorrichtung ein einziges Teil bildet, das aus Kunststoff geformt ist.

3. Handhabungsvorrichtung nach Anspruch 2, dadurch **gekennzeichnet**, dass sie zwei Saugnäpfe (6) aufweist, während die Anordnung der kleinen Glieder (17) im Ruhezustand im wesentlichen als einstückige Raute ausgebildet ist, und die beweglichen Steuerbereiche (18) im wesentlichen an den beiden gegenüberliegenden Scheiteln der Raute angeordnet sind.

4. Handhabungsvorrichtung nach Anspruch 3, dadurch **gekennzeichnet**, dass die Betätigungsverbindungen (16) in ihrer Zahl gleich zwei sind und im wesentlichen an den beiden anderen gegenüberliegenden Scheiteln der genannten Raute angeordnet sind.

5. Handhabungsvorrichtung nach irgendeinem der Ansprüche 1 bis 4, dadurch **gekennzeichnet**, dass jeder Saugnapfverbinder (10) durch mindestens einen Finger des Saugnapfes gebildet wird, der als Vorsprung auf dem zugeordneten Saugnapf (6) angeordnet ist, und in eine Nut (18) eingreift, mit der die Steueranordnung (17-18) versehen ist.

6. Handhabungsvorrichtung nach Anspruch 5, dadurch **gekennzeichnet**, dass jeder Saugnapf (6) durch Formen erhalten wird und jeder Finger des Saugnapfes (10) fest mit dem Rand (11) des zugeordneten Saugnapfes durch Befestigung in diesem Saugnapf zum Zeitpunkt des Formens desselben fest verbunden wird oder als einstückiger Körper geformt wird.

7. Handhabungsvorrichtung nach irgendeinem der Ansprüche 1 bis 6, dadurch **gekennzeichnet**, dass jede Betätigungsverbindung (16) durch mindestens einen Betätigungsfinger gebildet wird, der fest mit einem Betätigungselement (14) verbunden ist und der in eine Nut (18) eingreift, mit der die Steueranordnung (17-18) versehen ist.

8. Handhabungsvorrichtung nach Anspruch 7, dadurch **gekennzeichnet**, dass jedes Betätigungselement (14) aus einem Kunststofformteil besteht und jeder Betätigungsfinger (16) einstückig mit dem zugeordneten Betätigungselement zum Zeitpunkt des Formens desselben erhalten wird.

9. Handhabungsvorrichtung nach irgendeinem der Ansprüche 1 bis 8, dadurch **gekennzeichnet**, dass jede Betätigungsverbindung (16) auf einem Führungsschieber (14) befestigt ist, der verschiebbar auf dem Körper (1) montiert ist.

10. Handhabungsvorrichtung nach irgendeinem der Ansprüche 1 bis 9, dadurch **gekennzeichnet**, dass der Körper (1) auf seinem oberen Teil einen Handgriff (2) aufweist, dessen Oberseite (5) von vorne nach hinten gegenüber der Ebene (D) der Angriffsseite (12) der Saugnäpfe (6) geneigt ist.

11. Handhabungsvorrichtung nach irgendeinem der vorausgehenden Ansprüche, dadurch **gekennzeichnet**, dass sie mehrere Saugnäpfe aufweist, die mit einer einzigen einstückigen Steueranordnung (17-18) derart gekoppelt sind, dass sie in einer einzigen Betätigung die Beseitigung der Erfassungswirkungen der verschiedenen Saugnäpfe gestatten.

## Claims

1. Handling assembly incorporating deformable suction cups for handling objects, such as plate glass, presenting a smooth and non-porous surface for application of the suction cups, said assembly comprising a body (1), at least one deformable suction cup (6) mounted on this body and a mechanism for suppressing the gripping effect of the suction cups by deformation of the edge of each suction cup,

<u>characterized in that</u> the mechanism is itself constituted by :

at least one manoeuvring member (14), such as a pusher, mounted mobile on the body (1) ;

a single-piece control assembly (17-18) mounted mobile on the body (1) and with respect thereto and presenting at least as many mobile control zones (18) as there are suction cups ;

as many suction cup connections (10) as there are suction cups, each suction cup connection (10) connecting one suction cup (6) to one of said control zones (18) ;

and as many manoeuvring connections (16) as there are manoeuvring members (14), each manoeuvring connection (16) connecting one manoeuvring member (14) to said control assembly (17-18).

2. Handling assembly according to claim 1, characterized in that the control assembly is constituted by a polygon of variable geometry formed by small rods (17), the assembly forming a single piece moulded in a plastics material.

3. Handling assembly according to claim 2, characterized in that it comprises two suction cups (6), whilst the assembly of the small rods (17), at rest, is shaped substantially as a one-piece rhombus and the mobile control zones (18) are disposed substantially at two opposite apices of said rhombus

4. Handling assembly according to claim 3, characterized in that the manoeuvring connections (16) are two in number and are disposed substantially at the other two opposite apices of said rhombus.

5. Handling assembly according to any one of claims 1 to 4, characterized in that each suction cup connection (10) is constituted by at least one suction cup finger projecting from the suction cup associated (6) therewith and engaged in a groove (18) with which the control assembly (17-18) is provided.

6. Handling assembly according to claim 5, characterized in that each suction cup (6) is made by moulding and each suction cup finger (10) is rendered fast with the edge (11) of the suction cup associated therewith by fixation in said suction cup at the moment of moulding thereof or moulded in a single-piece body.

7. Handling assembly according to any one of claims 1 to 6, characterized in that each manoeuvring connection (16) is constituted by at least one manoeuvring finger fast with a manoeuvring member (14) and engaged in a groove (18) with which the control assembly (17-18) is provided.

8. Handling assembly according to claim 7, characterized in that each manoeuvring member (14) is made of a moulded plastics material and each manoeuvring finger (16) is made in one piece with the manoeuvring member associated therewith at the moment of moulding thereof.

9. Handling assembly according to any one of claims 1 to 8, characterized in that each manoeuvring connection (16) is fixed on a guide block (14) mounted to slide on the body (1).

10. Handling assembly according to any one of claims 1 to 9, characterized in that the body (1) presents in its upper part a handle (2) of which the upper face (5) is inclined from front to rear with respect to the plane (D) of the face of application (12) of the suction cups (6).

11. Handling assembly according to any one of the preceding claims, characterized in that it comprises a plurality of suction cups which are all joined to a single one-piece control assembly (17-18), so as to allow in one manoeuvre the suppression of the gripping effects of the various suction cups.

Fig.1

Fig.2

Fig.3

Fig.6

Fig.4

Fig.5